# EUROPÄISCHE PATENTANMELDUNG

(11) **EP 1 245 843 A1**
(43) Veröffentlichungstag der Anmeldung: **02.10.2002**
(21) Anmeldenummer: 02004471.5
(22) Anmeldetag: 27.02.2002
(51) Int. Cl.: F16B 43/00

(54) **Befestigungselement für verhältnismässig weiche Wandplatten**

(30) Priorität: 12.03.2001 CH 4502001
(71) Anmelder: Studer, Bruno, 4603 Olten (CH)
(72) Erfinder: Studer, Bruno, 4603 Olten (CH)
(74) Vertreter: Morva, Tibor

(57) **Zusammenfassung**

Das Befestigungselement ist für verhältnismässig weiche, für das Einsetzen von Dübeln ungeeignete Wandplatten vorgesehen. Es besteht aus einer Gewindestange (3) an deren einem Ende ein Mutterstück (1) und an deren anderem Ende eine Befestigungsschraube (5) aufgeschraubt sind. Das Mutterstück (1) ist an seiner Aussenoberfläche bogenförmig gewölbt und steht an der Wandplatte (8) verdrehungssicher an. Die Gewindestange (3) durchdringt die Wandplatte (8) und trägt an ihrem dem Mutterstück (1) abgekehrten Endbereich den zu befestigenden Gegenstand (9) und eine Unterlagscheibe (4), die mit der Befestigungsschraube (5) zusammengehalten sind. Damit beim Anziehen der Befestigungsschraube (5) die an der verhältnismässig weichen Wandplatte (8) anstehenden Teile des Mutterstückes (1) die Wandplatte (8) nicht eindrücken und beschädigen, ist zwischen dem Mutterstück (1) und der Unterlegscheibe (4) ein die Unterlegscheibe (4) vom Mutterstück (1) auf einen vorbestimmten Abstand haltender Distanzhalter (6, 7) vorgesehen. Der vorbestimmte Abstand ist durch die Dicke der Wandplatte (8) und des zu befestigenden Gegenstandes (9) gegeben. Das Befestigungselement ist vorteilhaft auch bezüglich Betriebssicherheit, einfache Montage und Reinigung in hygienisch sauberen Räumen.

## Beschreibung

Die vorliegende Erfindung betrifft ein Befestigungselement für verhältnismässig weiche Wandplatten, mit einer die Wandplatte durchdringenden Gewindestange, mit einem am einen Ende der Gewindestange aufgeschraubten, an seiner Aussenoberfläche bogenförmig gewölbten, an der Wandplatte verdrehungssicher anstehenden Mutterstück, mit einer am abgekehrten Ende der Gewindestange über den zu befestigenden Gegenstand auf die Gewindestange aufgeschobenen Unterlegscheibe und mit einer daran anschliessenden Befestigungsmutter.

Aus dem deutschen Gebrauchsmuster DE-U1-29515409 ist ein Befestigungselement insbesondere für Holzverbindungen bekannt, das aus einer Gewindestange, aus einem am einen Ende der Gewindestange aufgeschraubten Flachrundkopf und aus einer am anderen Ende der Gewindestange aufgeschraubten Gegenmutter gebildet ist. Der aufgeschraubte Flachrundkopf ist an seiner dem Holzstück zugekehrten Seite mit einem Vierkantprofil versehen, das beim Anziehen der Gegenmutter in das Holz eingezogen wird und so ein Verdrehen des Flachrundkopfes am Holz verhindert. Die Gegenmutter kann somit ohne Verdrehen der in den Flachrundkopf eingeschraubten Gewindestange angezogen werden. Dieses Befestigungelement muss durch die Gegenmutter so stark gespannt werden, dass ein unter der Gegenmutter auf der Gewindestange liegender, zu befestigender Gegenstand am darunterliegenden Holz hält. Die auf das tragende Element, hier auf das Holz, wirkende Druckbelastung hängt nebst der Spannung durch die Gegenmutter auch vom Gewicht des zu befestigenden Gegenstandes ab. Die Druckbelastung ist in der Regel so hoch, dass ein verhältnismässig weiches Tragelement, wie z.B. ein druckgeschäumtes Wandelement, oder ein Presspanelement, oder ein Gipskartonständerwand diesem Druck nicht gewachsen ist. Solche Werkstoffe sind für den Einsatz von allfällige Befestigungsschrauben aufnehmenden Dübeln auch ungeeignet, weil ein Dübel im Material der Wandplatte nicht hält und daraus ausgerissen werden kann.

Die Aufgabe der vorliegenden Erfindung ist es, ein Befestigungselement für verhältnismässig weiche, für den Einsatz von Dübeln ungeeignete Wandplatten vorzuschlagen, das für die Befestigung verschiedener Gegenstände an solchen Wandplatten ohne Beschädigung der Wandplatte zulässt, die zu befestigenden Gegenstände sicher hält und wirtschaftlich vorteilhaft ist.

Die gestellte Aufgabe ist dadurch gelöst, dass zwischen dem Mutterstück und der Unterlegscheibe ein die Unterlegscheibe vom Mutterstück auf einen vorbestimmten, durch die Dicke der Wandplatte und des zu befestigenden Gegenstandes bestimmten Abstand haltender Distazhalter vorgesehen ist. Der Distanzhalter verhindert, dass die Wandplatte beim Anziehen der Befestigungsmutter und bei der dabei auftretenden Druckbelastung eingedrückt und beschädigt wird. Der zu befestigende Gegenstand wird durch dieses Befestigungselement an einer verhältnismässig weichen Wandplatte sicher gehalten.

Der Distanzhalter ist vorteilhafterweise ein auf die Gewindestange aufgeschobenes, am Mutterstück und an der Unterlegscheibe anstehendes Distanzrohr. Das Distanzrohr ist ein einfaches Element und ermöglicht eine einfache Montage des Befestigungselementes.

Der Distanzhalter kann auch aus einer auf die Gewindestange aufgeschraubten und an der Unterlegscheibe anstehenden, gegen Verdrehung gesicherten Distanzmutter bestehen. Mit einer einfachen Distanzmutter kann der Abstand zwischen dem Mutterstück und der Unterlegscheibe eingehalten werden, wobei die Distanzmutter gegen Verdrehung gesichert ist, damit der Abstand sich nicht ungewollt ändern kann.

Die Gewindestange ist mit Vorteil auf eine durch die Summe mindestens der Dicke der Wandplatte, der Dicke des zu befestigenden Gegenstandes und der Dicke der Unterlegscheibe sowie durch die Eintauchtiefe der Gewindestange im Mutterstück und in der Befestigungsmutter gegebene Länge am Einsatzort abgeschnitten. Durch diese Massnahme ist das Befestigungselement allgemein, unabhängig von der Dicke der Wandplatte und von der Dicke des zu befestigenden Gegenstandes verwendbar, wobei genügend lange Gewindestangen vorhanden sein müssen.

Das Mutterstück kann mit verschiedenen, an der Aussenoberfläche gemessenen Durchmessern zur Auswahl stehen. So ist es möglich den Durchmesser des Mutterstückes nach der zu erwartenden Belastung des Befestigungselementes zu wählen. Die verhältnismässig weiche Wandplatte wird dadurch nur mit dem zulässigen spezifischen Duck belastet.

Im folgenden werden anhand der beiliegenden Zeichnungen Ausführungsbeispiele der Erfindung näher beschrieben. Es zeigen:
- Fig.1: ein Mutterstück im Schnitt,
- Fig.2: eine Gewindestange,
- Fig.3: eine Unterlegscheibe im Schnitt,
- Fig.4: eine Befestigungsmutter
- Fig.5: ein Distanzrohr im Schnitt,
- Fig.6: eine Distanzmutter im Schnitt,
- Fig.7: das Mutterstück in der Draufsicht,
- Fig.8: die Zusammenstellung des Befestigungselementes mit einer Wandplatte, mit einem zu befestigenden Gegenstand und mit einem Distanzrohr und
- Fig.9: die Zusammenstellung des Befestigungselementes mit einer Wandplatte, mit einem zu befestigenden Gegenstand und mit einer Distanzmutter.

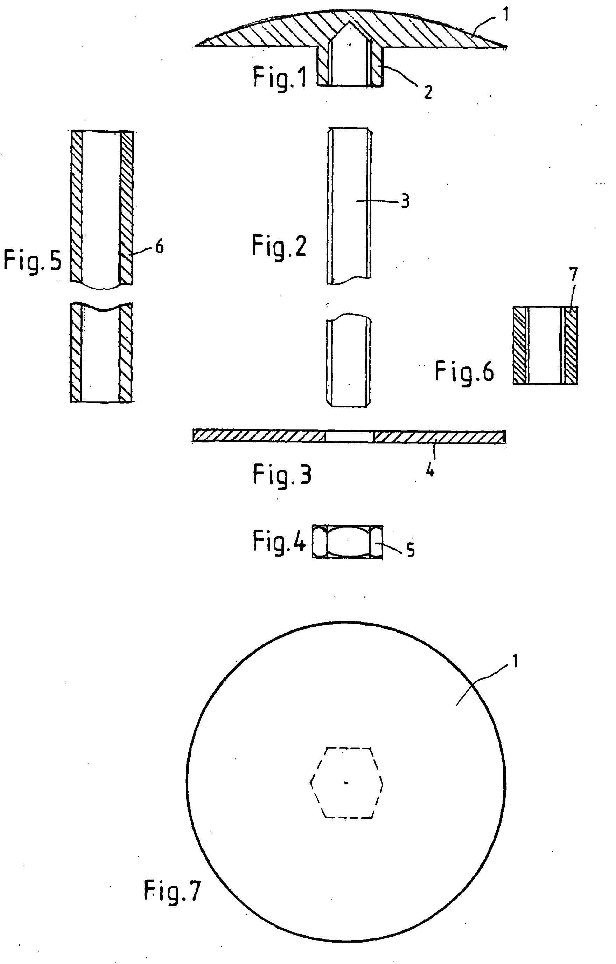

Die Fig.1 stellt ein Mutterstück 1 dar, das an seiner Aussenoberfläche bogenförmig gewölbt und an seiner abgekehrten Seite mit einem ein Innengewinde tragenden Fortsatz 2 versehen ist. In Fig.2 ist eine mit seinem einen Ende in das Innengewinde des Fortsatzes 2 einschraubbare Gewindestange 3 dargestellt. Fig.3 zeigt eine auf die Gewindestange 3 aufschiebbare Unterlegscheibe 4. In Fig.4 ist eine die Gewindestange 3 abschliessende Befestigungsmutter 5 ersichtlich. In Fig.5 erkennt man ein Distanzrohr 6, das auf die Gewindestange 3 geschoben die Distanz zwischen dem Mutterstück 1 und der Unterlegscheibe 4 bestimmt. Fig.6 zeigt eine auf die Gewindestange 3 aufschraubbare Distanzmutter 7. Die Unterlegscheibe 4 steht an dieser aufgeschraubten Distanzmutter 7 an und bestimmt die Distant zwischen dem Mutterstück 1 und der Unterlegscheibe 4. Fig.7 zeigt die Draufsicht auf das Mutterstück 1.

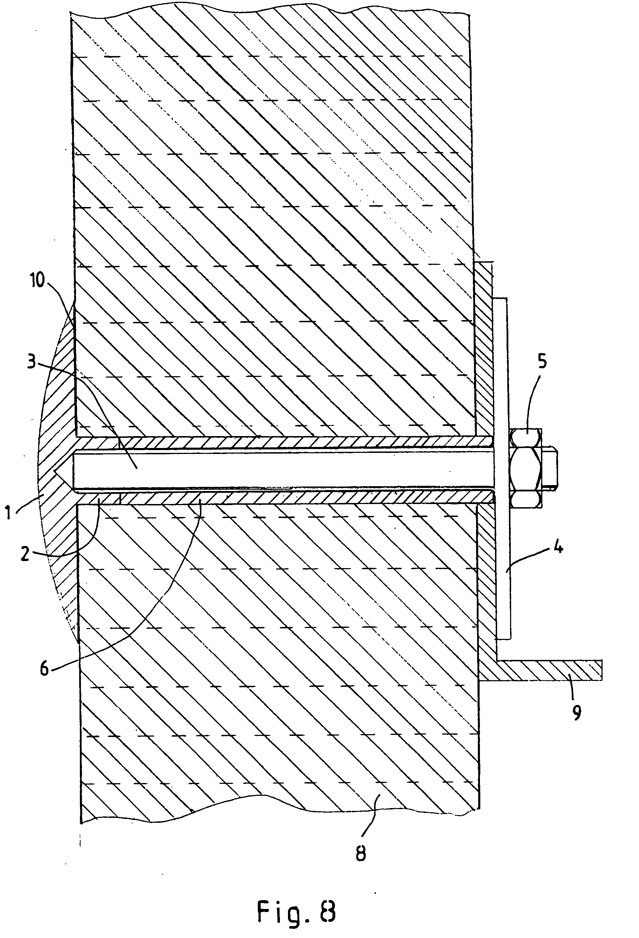

In Fig.8 ist die Zusammenstellung des Befestigungselementes mit einer verhältnismässig weichen Wandplatte 8 und mit einem daran zu befestigenden Gegenstand 9 dargestellt. An dieser Wandplatte 8 kann der zu befestigenden Gegenstand 9 nicht mit einem Dübel und mit einer geeigneten Schraube befestigt werden, weil die Wandplatte 8 dabei um den Dübel ausgerissen würde. Bei der Montage des Befestigungselementes wird in einem ersten Schritt in der Wandplatte 8 eine dem Aussendurchmesser des Distanzrohres 6 entsprechende Bohrung erstellt. Danach wird ein doppelseitig klebender Ring 10 für die Auflagefläche des Mutterstückes 1 zugeschnitten und um den Fortsatz 2 des Mutterstückes 1 am Mutterstück 1 angebracht. Danach schraubt man die Gewindestange 3 in die Gewindebohrung im Fortsatz 2 des Mutterstückes 1 hinein. Darauf stösst man die Gewindestange 3 durch das in die Wandplatte 8 eingesetzte Distanzrohr 6 durch und bringt man das mit einer Klebschicht versehene Mutterstück 1 an die Wandplatte 8 an. Der auf das Mutterstück 1 aufgebrachte doppelseitig klebende Ring 10 hält das Mutterstück 1 verdrehungssicher an der Wandplatte 8 und schliesst den Spalt zwischen dem Mutterstück 1 und der Wandplatte 8 dicht ab. Die bogenförmig gewölbte Oberfläche und das dichte Anliegen des Mutterstückes 1 an der Wandplatte 8 ist in hygienisch sauber zu haltenden Räumen erwünscht oder sogar vorgeschrieben. Die hygienisch sauber zu haltenden Räume sind in den lebensmittelverarbeitenden Betrieben oder in der chemischen, insbesondere in der pharmazeutischen Industrie anzutreffen. Auf den an der abgekehrten Seite der Wandplatte 8 vorstehenden Teil der Gewindestange 3 schiebt man den zu befestigenden Gegenstand 9 und die Unterlegscheibe 4 auf und schraubt man die Befestigungsmutter 5 auf. Die Befestigungsmutter 5 kann jetzt fest angezogen werden, weil die Gewindestange 3 im Mutterstück verdrehungssicher gehalten ist und weil das Distanzrohr 6 die Zerstörung der verhältnismässig weichen Wandplatte 8 durch den beidseitigen Anschlag verhindert. Das Distanzrohr 6 muss auf die einzuhaltende Distanz genau zugeschnitten sein. Diese Distanz ist durch die Summe der Dicke der Wanplatte 8 und der Dicke des zu befestigenden Gegenstandes 9, abzüglich die Länge des Fortsatzes 2 am Mutterstück 1 gegeben.

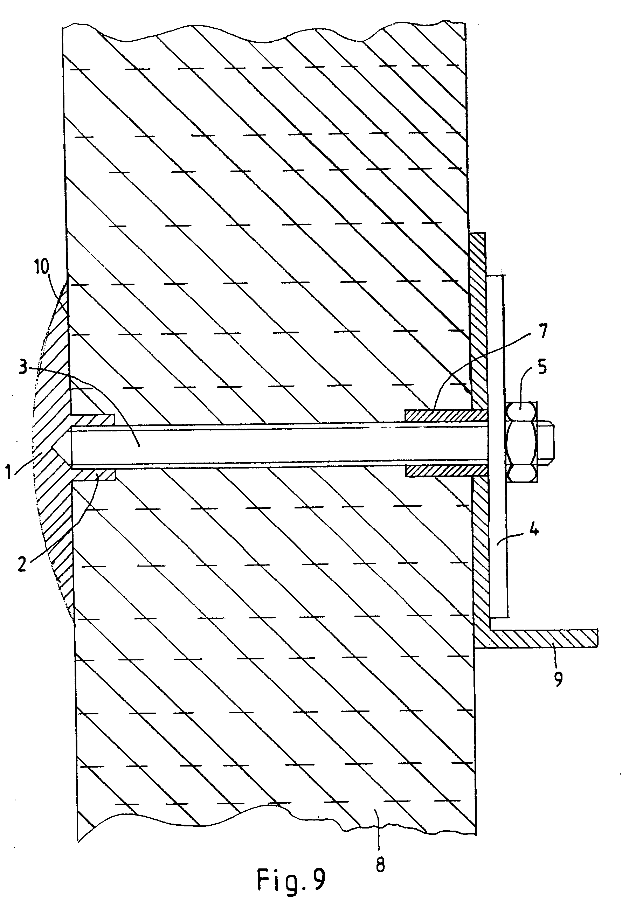

In Fig.9 ist die Zusammenstellung des Befestigungselementes mit einer verhältnismässig weichen Wandplatte 8 und mit einem daran zu befestigenden Gegenstand 9 dargestellt. Bei der Montage des Befestigungselementes wird in einem ersten Schritt in der Wandplatte 8 eine dem Aussendurchmesser der Gewindestange 3 entsprechende Bohrung erstellt. Von der dem Mutterstück 1 abgekehrten Seite der Wandplatte 8 her wird die beretis erstellte Bohrung mit einer dem Aussendurchmesser der Distanzmutter 7 entsprechenden Grösse auf eine Länge, die der Länge der Distanzmutter 7 abzüglich die Dicke des zu befestigenden Gegenstandes 9 entspricht, aufgebohrt. Danach wird ein doppelseitig klebender Ring 10 für die Auflagefläche des Mutterstückes 1 zugeschnitten und um den Fortsatz 2 am Mutterstück 1 angebracht. Danach setzt man das Mutterstück 1 an der Oberfläche der Wandplatte 8 an und bringt man dabei den Fortsatz 2 des Mutterstückes 1 in die Bohrung der Wandplatte 8 hinein. Auf die Gewindestange 3 wird jetzt die Distanzmutter 7 aufgeschraubt und zwar unter Beachtung der zwischen dem Mutterstück 1 und der Unterlegscheibe 4 einzuhaltenden Distanz. Die Distanzmutter 7 wird in dieser Position auf der Gewindestange 3 durch ein Klebstofftropfen gegen Verdrehung gesichert. Jetzt kann die mit der Distanzmutter 7 ausgerüstete Gewindestange 3 durch die Bohrung in der Wandplatte 8 durchgestossen und in das Mutterstück 1 eingeschraubt werden. Danach wird der zu befestigenden Gegenstand 9 und die Unterlegscheibe 4 auf den vorstehenden Teil der Gewindestange 3 geschoben und mit der Befestigungsmutter 5 festgeschraubt. Die Befestigungsmutter 5 kann ohne Gefahr richtig angezogen werden, denn die Unterlegscheibe 4 an der Distanzmutter 7 ansteht und ein Eindringen des gewölbten Teiles des Mutterstückes in die Wandplatte 8 und dadurch ihre Beschädigung verhindert.

## Patentansprüche

1. Befestigungselement für verhältnismässig weiche Wandplatten (8), mit einer die Wandplatte (8) durchdringenden Gewindestange (3), mit einem am einen Ende der Gewindestange (3) aufgeschraubten, an seiner Aussenoberfläche bogenförmig gewölbten, an der Wandplatte (8) verdrehungssicher anstehenden Mutterstück (1), mit einer am abgekehrten Ende der Gewindestange (3) über den zu befestigenden Gegenstand (9) auf die Gewindestange (3) aufgeschobenen Unterlegscheibe (4) und mit einer daran anschliessenden Befestigungsmutter (5), **dadurch gekennzeichnet, dass** zwischen dem Mutterstück (1) und der Unterlegscheibe (4) ein die Unterlegscheibe (4) vom Mutterstück (1) auf einen vorbestimmten, durch die Dicke der Wandplatte (8) und des zu befestigenden Gegenstandes (9) bestimmten Abstand haltender Distanzhalter (6, 7) vorgesehen ist.

2. Befestigungselement nach Anspruch 1, **dadurch gekennzeichnet, dass** der Distanzhalter (6) ein auf die Gewindestange (3) aufgeschobenes, am Mutterstück (1) und an der Unterlegscheibe (4) anstehendes Distanzrohr (6) ist.

3. Befestigungselement nach Anspruch 1, **dadurch gekennzeichnet, dass** der Distanzhalter (7) aus einer auf die Gewindestange (3) aufgeschraubten und an der Unterlegscheibe (4) anstehenden, gegen Verdrehung gesicherten Distanzmutter (7) besteht.

4. Befestigungselement nach einem der Ansprüche 1 bis 3, **dadurch gekennzeichnet, dass** die Gewindestange (3) auf eine durch die Summe mindestens der Dicke der Wandplatte (8), der Dicke des zu befestigenden Gegenstandes (9) und der Dicke der Unterlegscheibe (4) sowie durch die Eintauchtiefe der Gewindestange (3) im Mutterstück (1) und in der Befestigungsmutter (5) gegebene Länge am Einsatzort abgeschnitten ist.

5. Befestigungselement nach Anspruch 1, **dadurch gekennzeichnet, dass** das Mutterstück (1) mit verschiedenen an der Aussenoberfläche gemessenen Durchmessern zur Auswahl steht.

6. Befestigungselement nach Anspruch 5, **dadurch gekennzeichnet, dass** der Durchmesser der Aussenoberfläche des Mutterstückes (1) nach der zu erwartenden Belastung des Befestigungselementes gewählt ist.
